(19) Europäisches Patentamt

European Patent Office

Office européen des brevets

(11) Veröffentlichungsnummer: **0 075 741**
**B1**

(12) **EUROPÄISCHE PATENTSCHRIFT**

(45) Veröffentlichungstag der Patentschrift:
12.03.86

(21) Anmeldenummer: 82108009.0

(22) Anmeldetag: 31.08.82

(51) Int. Cl.⁴: **G 06 F 9/26**

(54) Mikroprogrammierter Prozessor.

(30) Priorität: 30.09.81 DE 3138971

(43) Veröffentlichungstag der Anmeldung:
06.04.83 Patentblatt 83/14

(45) Bekanntmachung des Hinweises auf die Patenterteilung:
12.03.86 Patentblatt 86/11

(84) Benannte Vertragsstaaten:
DE FR GB

(56) Entgegenhaltungen:
**EP - A - 0 010 193**
**US - A - 3 949 372**
**US - A - 3 964 027**
**US - A - 4 153 937**

**IBM TECHNICAL DISCLOSURE BULLETIN, Band 14, Nr.
12, Mai 1972, Seiten 3857-3859, New York, USA, G.
KURTZ et al.: "Dynamically paged control store buffer
management"
IEEE COMPUTER SOCIETY INTERNATIONAL
CONFERENCE 6, 28. Februar - 3. März 1978, Seiten
81-87, New York, USA, J.R. MICK: "Microprogramming
techniques using the Am2910 sequencer"**

(73) Patentinhaber: **Siemens Aktiengesellschaft, Berlin und
München Wittelsbacherplatz 2, D-8000 München 2 (DE)**

(72) Erfinder: **Augspurger, Uwe, Dipl.-Ing.,
Bruno-Walter-Ring 32, D-8000 München 81 (DE)**
Erfinder: **Benz, Michael, Dipl.-Ing.,
Gabriel-Münter-Strasse 15, D-8000 München 71 (DE)**
Erfinder: **Stockinger, Josef, Dipl.-Ing.,
Lerchenfeldstrasse 31, D-8000 München 22 (DE)**

## Beschreibung

Die Erfindung bezieht sich auf einen mikroprogrammierten Prozessor nach dem Oberbegriff des Patentanspruchs 1.

Zur Steuerung von mikroprogrammierten Prozessoren werden schnelle Steuerspeicher benötigt. Die Steuerspeicher hochintegrierter Prozessoren befinden sich aus diesem Grund meist mit der Verarbeitungseinheit auf einem Baustein. Flexible und leistungsstarke Steuerwerke, insbesondere solche mit schreibbaren Steuerspeichern, benötigen grosse Steuerspeicher.

Ein grosser Steuerspeicher, in dem eine Vielzahl von Mikroprogrammen gespeichert ist, kann jedoch nicht mit dem Prozessor auf einem Baustein integriert sein. Deshalb ist es bekannt, den Steuerspeicher in einen ersten und einen zweiten Steuerspeicher zu unterteilen. Der erste Steuerspeicher ist dann Teil des Prozessors und kann z.B. als Festspeicher ausgeführt sein. Der zweite Teil des Steuerspeichers wird vom Hauptspeicher gebildet, der getrennt vom Prozessor angeordnet ist und eine erheblich grössere Zugriffszeit hat. Eine derartige Aufteilung eines Steuerspeichers in zwei getrennt liegende Steuerspeicher mit verschiedenen Zugriffszeiten kann z.B. der US-A-4 153 937, US-A- 3 949 372, US-A- 3 964 027 und EP-A-1- 0 010 193 entnommen werden. Bei all diesen Prozessorsystemen wird die Verarbeitungszeit jedoch dadurch grösser, dass zu den Mikroprogrammen, die im Hauptspeicher gespeichert sind, unmittelbar zugegriffen wird. Die Zugriffszeit zum Hauptspeicher geht somit wesentlich in die Verarbeitungszeit der Mikroprogramme ein.

Die der Erfindung zugrundeliegende Aufgabe besteht darin, einen mikroprogrammierten Prozessor nach dem Oberbegriff des Anspruchs 1 anzugeben, welcher ein flexibles und leistungsstarkes Steuerwerk deswegen aufweist, weil eine Vielzahl von Mikroprogrammen zum Betrieb des Prozessors vorhanden sind und dessen Verarbeitungszeit trotzdem klein ist.

Diese Aufgabe wird erfindungsgemäss durch einen mikroprogrammierten Prozessor der eingangs angegebenen Art gelöst, welcher die kennzeichnenden Merkmale des Patentanspruchs 1 aufweist.

Ausgestaltungen und Vorteile der Erfindung sind in den Unteransprüchen, der Beschreibung sowie der Zeichnung dargestellt.

Die Erfindung ist in der Zeichnung dargestellt und wird im folgenden näher erläutert.

Fig. 1 zeigt die Verbindungen der Funktionseinheiten eines erfindungsgemässen mikroprogrammierten Prozessors untereinander in vereinfachter Form.

Fig. 2 zeigt ein Blockschaltbild des Leitwerks eines erfindungsgemässen mikroprogrammierten Prozessors.

Fig. 3 zeigt ein vereinfachtes Blockschaltbild einer erfindungsgemässen Mikroprogramm-Speichereinheit.

Fig. 4 zeigt ein Flussdiagramm für die Mikroprogramm-Abarbeitung aus getrennt liegenden Steuerspeichern.

Bei der Beschreibung spezieller Ausführungsbeispiele wird im folgenden von einer Prozessor-Architektur ausgegangen, bei der ein mikroprogrammierter Prozessor in die Funktionseinheiten Leitwerk, Rechenwerk, Cache und Ein-/Ausgabe gegliedert ist. Diese Funktionseinheiten kommunizieren über Busse miteinander.

Auch wenn die folgenden speziellen Ausführungsbeispiele von Prozessoren dieser Art ausgehen, ist die Erfindung nicht auf solche Prozessoren beschränkt.

Das Leitwerk ist mikroprogrammierbar, d.h. der Mikroprogrammspeicher ist ein Schreib-Lese-Speicher (RAM). Aus Geschwindigkeitsgründen ist ein möglichst grosser Teil des Mikroprogrammspeichers auf dem Prozessorchip integriert, z.B. 512 Worte. Da der andere Teil des Mikroprogrammspeichers in einem anderen Speicher liegt, z.B. im Hauptspeicher, ist es sinnvoll, eine Mikroprogramm-Wortbreite von der Wortbreite dieses Speichers oder von einem Vielfachen der Wortbreite dieses Speichers zu nehmen. Das Leitwerk weist eine modulare Struktur (z.B. Slice-Technik) mit möglichst regelmässigen Blöcken auf, wodurch ein VLSI-gerechtes Design ermöglicht wird.

Ausgangspunkt für das Leitwerk ist die Maschinenbefehlsebene. Diese Ebene ist die niedrigste Software-Ebene, die dem Anwender normalerweise zur Verfügung steht. Aufgabe des Leitwerks ist es, die Maschinenbefehle (Makro-Befehle) per Mikroprogramm in hardware-nähere Operationen umzusetzen. Diese Umsetzung kann in mehreren Mikroprogrammzyklen erfolgen, wobei ein Zyklus aus dem Auslesen und Auswerten eines Mikrobefehlswortes besteht. Ein Mikrobefehl enthält mehrere Nano-Befehle, welche die Funktionseinheiten des Prozessors steuern. Die Nano-Befehle werden in den Funktionseinheiten interpretiert bzw. in Steuersignale umgesetzt.

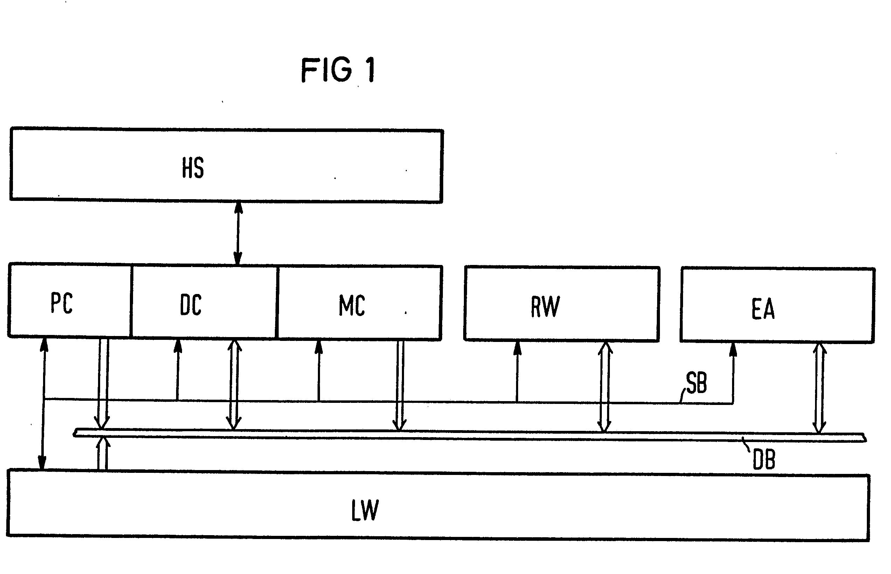

Fig. 1 zeigt die Verbindungen der Funktionseinheiten eines erfindungsgemässen mikroprogrammierten Prozessors in vereinfachter Form. Der Steuerbus SB überträgt in erster Linie die Nano-Befehle vom Leitwerk LW zu den Funktionseinheiten. Diese Funktionseinheiten sind z.B. der Cache-Speicher, bestehend aus dem Programmspeichercache PC, aus dem Datenspeichercache DC und aus dem Mikroprogrammspeichercache MC. Weitere Funktionseinheiten sind das Rechenwerk RW und die Ein-/Ausgabeeinheit EA. Der Datenbus DB überträgt Operanden, Speicheradressen, Maschinenbefehle, Mikroprogrammworte und Statusinformationen.

Das Leitwerk LW greift generell über den Cachespeicher auf den Hauptspeicher HS zu. Der externe Adress- und Datenbus zum Hauptspeicher HS wird vom Cachespeicher verwaltet. Der Cachespeicher erhält vom Leitwerk LW den Nano-Befehl. Der Cachespeicher benötigt je nach seinem Speicherzustand unterschiedlich lange Ausführungszeiten und meldet sich mit der Erledigung des Auftrags über eine Ready-Leitung zurück. Es gibt drei funktionell unterschiedliche Cachespeicher. Das Datenspeichercache DC enthält die vom Prozessor zu berarbeitenden Daten. Das Programmspeichercache PC enthält die Maschinenbefehle, die vom Leitwerk LW abgearbeitet werden. Das Mikroprogrammspeichercache MC fungiert als Sekundärspeicher und enthält diejenigen Mikroprogrammteile, die im On-Chip-Mikroprogrammspeicher, der als Primärspeicher fungiert, keinen Platz mehr haben (externes Mikroprogramm im Mikroprogrammspeichercache MC). Der ladbare Mikroprogramm-Adresszähler wird bei jedem Mikroprogrammspeichercache-Zugriff incrementiert, so dass bei sequentiellen Mikroprogrammteilen keine Adress-Übergabe notwendig ist.

Das Datenspeichercache DC und das Programmspeichercache PC sind byteorientiert, das Mikroprogrammspeichercache MC ist wortorientiert.

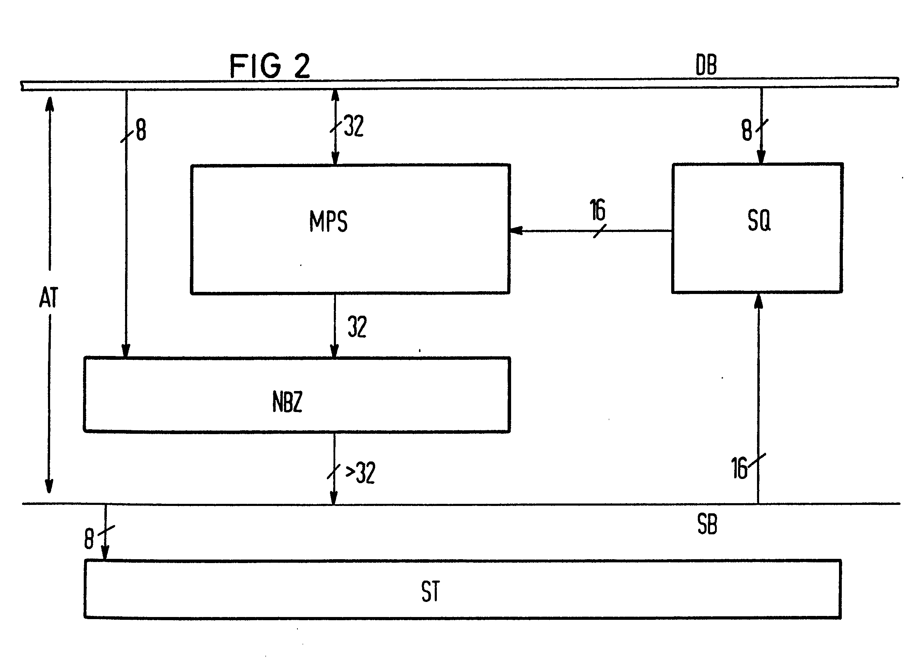

Fig. 2 zeigt ein Blockschaltbild des Leitwerks LW eines erfindungsgemässen mikroprogrammierten Prozessors. Das Leitwerk LW ist grob gegliedert in einen Steuerteil ST und einen Ausführungsteil AT. Der Steuerteil ST übt in erster Linie eine Decoderfunktion aus. Der Steuerteil ST wandelt Leitwerks-Nano-Befehle in breite Steuerworte um, welche dann die Einheiten des Ausführungsteils AT steuern. Der Ausführungsteil AT besteht aus den Einheiten Mikroprogramm-Speichereinheit MPS, Sequenzer SQ und Nano-Befehls-Zuteilungseinheit NBZ.

Aufgabe der Mikroprogramm-Speichereinheit MPS ist es, breite Mikrobefehle aus einem grossen Mikroprogrammspeicher zu liefern. Erfindungsgemäss ist nur ein kleiner Teil des Mikroprogrammspeichers (z.B. die unteren 512 Worte) Bestandteil der Mikroprogramm-Speichereinheit MPS. Der übrige Teil des Mikroprogramms befindet sich z.B. im Hauptspeicher HS und wird bei Bedarf wortweise angefordert. Die Mikroprogramm-Speichereinheit MPS steuert diesen Zugriff auf «externe» Mikrobefehle so eigenständig, dass die übrigen Blöcke des Leitwerks LW ausser einer zeitlichen Verzögerung praktisch nichts davon merken.

Aufgabe des Sequenzers SQ ist es, die jeweils nächste Mikroprogrammadresse zu berechnen. Es handelt sich hierbei z.B. um Incrementieren bei Mikroprogrammsequenzen, Addition bei relativen Sprüngen, Auswertung von Statusbits bei bedingten Sprüngen, Laden des Adress-Registers bei absoluten Sprüngen oder Retten der momentanen Adresse bei Unterprogrammsprüngen. Für die Berechnung der Mikroprogrammadresse können die unteren Bits des Datenbusses DB, Bits aus dem Mikrobefehl über den Steuerbus SB und Statusbits ebenfalls über den Steuerbus SB sowie mehrere interne Register des Sequenzers SQ verwendet werden.

Aufgabe der Nano-Befehls-Zuteilungseinheit NBZ ist es, die Nano-Befehle für die einzelnen Funktionseinheiten des mikroprogrammierten Prozessors aufzubereiten und zum richtigen Zeitpunkt an die Funktionseinheiten des mikroprogrammierten Prozessors weiterzuleiten.

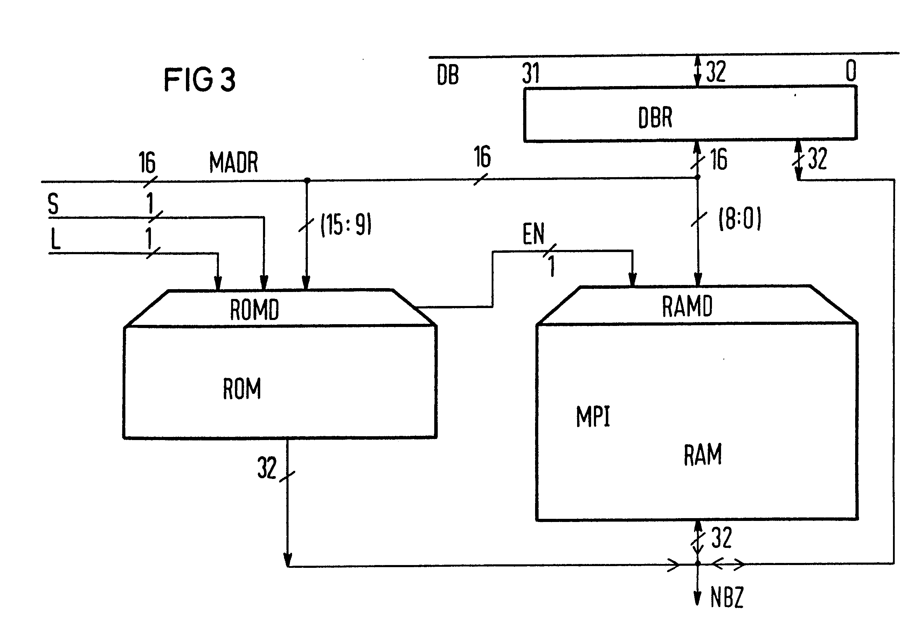

Fig. 3 zeigt ein Blockschaltbild der Mikroprogramm-Speichereinheit MPS. Die Mikroprogramm-Speichereinheit MPS sorgt für das Auslesen eines Mikroprogrammwortes aus einem virtuellen Speicher von z.B. 64 K Worten. Von diesen Worten befinden sich z.B. 512 Worte in dem On-Chip-Mikroprogrammspeicher (interner Mikroprogrammspeicher MPI). Die restlichen Mikroprogrammteile liegen extern z.B. im Hauptspeicher HS (externer Mikroprogrammspeicher MPE). Auf den externen Mikroprogrammspeicher MPE greift das Leitwerk LW über das Mikroprogrammspeichercache MC zu.

Das Auslesen und die Ausführung eines Mikrobefehls aus dem internen Mikroprogrammspeicher MPI erfolgt innerhalb eines Mikroprogrammzyklus. Das Holen eines Mikroprogrammwortes aus dem externen Mikroprogrammspeicher MPE erfordert einen zusätzlichen Zyklus.

Die Mikroprogramm-Speichereinheit MPS erhält vom Sequenzer SQ eine Mikroprogrammadresse MADR. Diese Adresse wird vom Decoder überprüft. Falls das gewünschte Wort innerhalb des internen Mikroprogrammspeichers MPI ist, wird das betreffende Wort ausgelesen und an die Nano-Befehls-Zuteilungseinheit NBZ übergeben. Falls das gewünschte Wort nicht im internen Mikroprogrammspeicher MPI ist, wird aus dem ROM-Bereich der Mikroprogramm-Speichereinheit MPS ein Ersatzwort ausgelesen, welches das Holen des gewünschten Wortes steuert. Ist ein Sprung zu einem externen Mikroprogrammteil notwendig, wird die Mikroprogrammadresse MADR gleichzeitig über das Datenbus-Register DBR dem Cachespeicher angeboten. Über das Datenbus-Register DBR findet der Datenaustausch der Mikroprogramm-Speichereinheit MPS mit dem Cachespeicher statt, wobei u.a. folgende Funktionen unterschieden werden können: Ausgabe der Mikroprogrammadresse MADR an den Cachespeicher, Übernahme eines Mikroprogrammwortes vom Cachespeicher.

Zur Abarbeitung extern liegender Mikroprogrammteile werden vom Cachespeicher über den Datenbus DB die Mikroprogrammworte eingelesen und direkt an die Nano-Befehls-Zuteilungseinheit NBZ weitergereicht. Die Steuerung dieses Vorgangs erfolgt durch ein oder mehrere Mikrobefehle aus dem internen Speicher der Mikroprogramm-Speichereinheit MPS. Diese Spezial-Mikrobefehle werden eingeschoben, bis das Mikroprogrammwort aus dem externen Speicher MPE vorliegt und ausgeführt werden kann. Die Spezial-Mikrobefehle müssen bereits beim Urladevorgang vorhanden sein, d.h. für ihre Speicherung ist ein ROM und für ihre Auswahl ein ROM-Decoder ROMD vorzusehen.

Der ROM-Decoder ROMD überprüft die oberen Adressbits der Mikroprogrammadresse MADR, ob ein internes oder ein externes Mikroprogrammwort gewünscht wird. Im ersten Fall wird der RAM-Decoder RAMD über die Leitung EN aktiviert und im letzteren Fall wird eines der ROM-Worte ausgelesen, wobei die Auswahl der ROM-Worte durch die beiden Steuerleitungen «Sprung» (S) und «Laden» (L) beeinflusst werden.

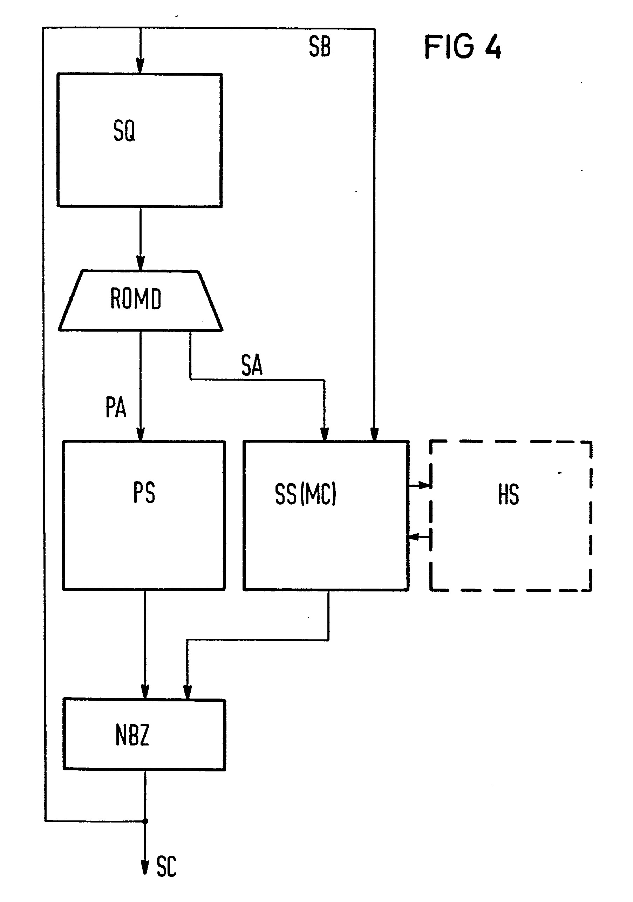

Fig. 4 zeigt ein Flussdiagramm für die Mikroprogramm-Abarbeitung aus getrennt liegenden Steuerspeichern.

Der gesamte Steuerspeicher besteht aus zwei getrennt liegenden Speichern, einem Primärspeicher PS und einem Sekundärspeicher SS. Der Primärspeicher PS und der Sekundärspeicher SS haben eine einheitliche Wortbreite und sind Schreib-Lese-Speicher. Der Primärspeicher PS ist im Verhältnis zum Sekundärspeicher SS klein mit kurzer Zugriffszeit. Der Primärspeicher PS ist z.B. mit auf dem Prozessorbaustein integriert und ist dadurch in seiner Grösse begrenzt. Der Sekundärspeicher SS ist grösser als der Primärspeicher PS und besitzt eine längere Zugriffszeit. Der Sekundärspeicher SS kann als eine Art Hintergrundspeicher angesehen werden, in dem die weniger häufig gebrauchten Mikroprogrammteile abgespeichert sind. Der Sekundärspeicher SS kann z.B. als On-Chip-Mikroprogrammspeichercache MC realisiert sein, so dass auf einen grossen Speicher (z.B. den Hauptspeicher HS) zugegriffen werden kann. Wenn das Mikroprogrammspeichercache MC auf den Hauptspeicher HS zugreift, ist es sinnvoll, die Steuerwortbreite identisch der Hauptspeicher-Wortbreite oder ein Vielfaches dieser Wortbreite zu machen. Treten unterschiedliche Wortbreiten auf, so bewältigt das Mikroprogrammspeichercache MC die Transformationen, die für eine Anpassung notwendig sind. Die Mikroprogrammadressen MADR aus der Adress-Fortschaltungseinheit (Sequenzer SQ) können den ganzen Steuerbereich abdecken. Primärspeicher PS und Sekundärspeicher SS werden bei sequentieller Mikroprogramm-Fortschaltung von separaten Zählern gesteuert. Der Zähler für den Primärspeicher PS befindet sich in der Adress-Fortschaltungseinheit (Sequenzer SQ), der Zähler des Sekundärspeichers SS befindet sich im Sekundärspeicher SS selbst. Wenn im Sekundärspeicher SS das Mikroprogramm sequentiell abläuft, ist somit eine Adress-Übergabe nicht notwendig. Über den Steuerbus SB werden Steuerbefehle SC zu den einzelnen Funktionseinheiten des Prozessors sowie an die Adress-Fortschaltungseinheit (Sequenzer SQ) und den Sekundärspeicher SS übergeben. Die Mikroprogramm-Abarbeitung im Sekundärspeicher SS wird über den Primärspeicher PS gesteuert. Der Adress-Decoder ROMD entscheidet, ob auf den Primärspeicher PS oder den Sekundärspeicher SS zugegriffen wird. Beim Zugriff auf den Primärspeicher PS wird die Primäradresse an den internen Mikroprogrammspeicher MPI angelegt und die Steuerbefehle werden über die Steuerwort-Einheit (Nano-Befehls-Zuteilungseinheit NBZ) auf den Steuerbus SB ausgegeben. Erkennt der Adress-Decoder ROMD eine Sekundäradresse, dann adressieren Ersatzadressen zwei spezielle Steuerworte im Primärspeicher PS. Diese beiden Steuerworte regeln über den Steuerbus SB die Sekundäradress-Übergabe sowie die Steuerwort-Übergabe an die Steuerwort-Einheit (Nano-Befehls-Zuteilungseinheit NBZ).

Die Mikroprogramm-Abarbeitung über den Sekundärspeicher SS erfordert ein oder zwei logische Zyklen mehr zuzüglich der längeren Zugriffszeit des Sekundärspeichers SS.

## Patentansprüche

1. Mikroprogrammierter, auf einem Halbleiterbaustein integrierter Prozessor mit einem Steuerspeicher, in dem die zum Betrieb des Prozessors erforderlichen Mikroprogramme gespeichert sind, gekennzeichnet durch folgende Merkmale:

– Es ist eine Mikroprogramm-Speichereinheit (MPS) vorgesehen, die auf dem Halbleiterbaustein mit integriert ist und die einen ersten Steuerspeicherteil (MPI) für einen Teil der Mikroprogramme enthält,

– ein zweiter Teil des Steuerspeichers, in dem der restliche Teil der Mikroprogramme gespeichert ist, ist ausserhalb der Mikroprogramm-Speichereinheit (MPS) angeordnet,

– der zweite Steuerspeicherteil (MC) besteht aus einem Mikroprogrammspeichercache, das mit einem Hintergrundspeicher (HS) verbunden sein kann,

– die Mikroprogramm-Speichereinheit (MPS) weist einen Adressendecoder (ROMD) auf, der feststellt, ob ein aufgerufenes Mikroprogramm in dem ersten Steuerspeicherteil (MPI) oder in dem zweiten Steuerspeicherteil (MC) gespeichert ist und der das Laden des aufgerufenen Mikroprogrammes aus dem zweiten Steuerspeicherteil (MC) veranlasst, wenn dieses nicht im ersten Steuerspeicherteil (MPI) gespeichert ist.

2. Prozessor nach Anspruch 1, dadurch gekennzeichnet, dass der zweite Steuerspeicherteil ebenfalls, auf dem Halbleiterbaustein mit integriert ist.

3. Prozessor nach Anspruch 1 oder 2, dadurch gekennzeichnet, dass die Mikroprogramm-Speichereinheit (MPS) aus dem ersten Steuerspeicherteil (MPI), dem Decoder (ROMD) und einem Festspeicher (ROM), der die Signale zur Ansteuerung des zweiten Steuerspeicherteiles (MC) enthält, besteht.

4. Mikroprozessor nach einem der vorhergehenden Ansprüche, dadurch gekennzeichnet, dass separate Adressenzähler für die Steuerspeicherteile vorgesehen sind.

## Revendications

1. Processeur microprogrammé, intégré sur un module de mémoire et comportant une mémoire de commande, dans laquelle les microprogrammes nécessaires pour le fonctionnement du processeur sont mémorisés, caractérisé par les caractéristiques suivantes:

– il est prévu une unité de mémoire de microprogrammes (MPS), qui est intégrée conjointement dans le module de mémoire et qui contient une première partie (MPI) de la mémoire de commande pour une partie des microprogrammes,

– une seconde partie de la mémoire de commande, dans laquelle la partie restante des micro-programmes est mémorisée, est disposée à l'extérieur de l'unité de mémoire des microprogrammes (MPS),

– la seconde partie (MC) de la mémoire de commande est constituée par une antémémoire de microprogrammes, qui peut être reliée à une mémoire secondaire (HS),

– l'unité de mémoire de microprogrammes (MPS) comporte un décodeur d'adresse (ROMD) qui établit si un microprogramme appelé est mémorisé dans la première partie (MPI) ou dans la seconde partie (MC) de la mémoire de commande et qui déclenche le chargement du microprogramme appelé à partir de la seconde partie (MC) de la mémoire de commande, lorsque ce microprogramme n'est pas mémorisé dans la première partie (MPI) de la mémoire de commande.

2. Processeur suivant la revendication 1, caractérisé par le fait que la seconde partie de la mémoire de commande est également intégrée conjointement dans le module à semiconducteurs.

3. Processeur suivant les revendications 1 ou 2, caractérisée par le fait que l'unité de mémoire des microprogrammes (MPS) est constituée par la première partie (MPI) de la mémoire de commande, par le décodeur (ROMD) et par une mémoire morte (ROM), qui contient des signaux servant à commander la seconde partie (MC) de la mémoire de commande.

4. Microprocesseur suivant l'une des revendications précédentes, caractérisé par le fait que les compteurs d'adresses séparés sont prévus pour les parties de la mémoire de commande.

**Claims**

1. A micro-programmed processor which is integrated on a semiconductor module and which has a control store, wherein the micro-programmes required for the operation of the processor are stored, characterised by the following features:

– there is provided a micro-programm storage unit (MPS) which is integrated on the semiconductor module and which comprises a first control store section (MPI) for some of the microprogrammes,

– a second section of the control store, wherein the remainder of the micro-programmes are stored, is arranged outside the micro-programme storage unit (MPS),

– the second control storage section (MC) comprises a micro-programme storage cache which can be connected to an auxiliary store (HS),

– the micro-programme storage unit (MPS) has an address decoder (ROMD) which ascertains whether a called-up micro-programme is stored in the first control store section (MOSI) or in the second control store section (MC) and which causes the loading of the called-up micro-programme from the second control store section (MC) if it is not stored in the first control store section (MPI).

2. A processor as claimed in claim 1, characterised in that the second control store section is likewise integrated on the semiconductor module.

3. A processor as claimed in claim 1 or 2, characterised in that the micro-programme storage unit (MPS) comprises the first control store section (MPI), the decoder (ROMD) and a read-only memory (ROM) which contains the signals for controlling the second control store section (MC).

4. A microprocessor as claimed in one of the preceding claims characterised in that there are provided separate address counters for the control store sections.

# FIG 1

0 075 741

FIG 2

FIG 3

3/4

0 075 741

4/4

FIG 4